# EUROPEAN PATENT SPECIFICATION

(11) **EP 0 697 247 B1**
(45) Date of publication and mention of the grant of the patent: **29.09.1999**
(21) Application number: 95201948.7
(22) Date of filing: 14.07.1995
(51) Int. Cl.: B01J 29/06, C10G 11/05

(54) **Process for the conversion of hydrocarbonaceous feedstock**
Verfahren zum Umwandlung von Kohlenwasserstoffeinsätzen
Procédé pour la conversion de charges hydrocarbonées

(30) Priority: 15.07.1994 EP 94202062
(43) Date of publication of application: 21.02.1996
(73) Proprietor: SHELL INTERNATIONALE RESEARCH MAATSCHAPPIJ B.V., 2596 HR Den Haag (NL)
(72) Inventor: Wielers, Antonius Franziskus Heinrich, NL-1031 CM Amsterdam (NL); Boxhoorn, Gosse, NL-1031 CM Amsterdam (NL); de Jong, Krijn Pieter, NL-1031 CM Amsterdam (NL); Mesters, Carolus Matthias Anna Maria, NL-1031 CM Amsterdam (NL)

(56) References cited:
- EP-A- 0 323 735
- US-A- 5 082 814

## Description

The present invention relates to a process for the catalytic conversion of a hydrocarbonaceous feedstock, more particularly to a process for the fluid catalytic cracking of a hydrocarbonaceous feedstock with enhanced selectivity to production of gasoline range hydrocarbons for the duration of the catalyst life, and to catalyst compositions which can be used in such processes.

It is well known to employ fluid catalytic cracking (FCC) processes for the conversion of hydrocarbonaceous feedstocks of desired grade and boiling range into lighter cracked products which find application, inter alia, as motor fuels, diesel fuels, oils and chemical feedstocks. In a standard FCC process, a feedstock is contacted with a catalyst at elevated temperature whereby feedstock is converted into cracked products which are recovered and of which some deposit on the catalyst to form coke, deactivating the catalyst. The catalyst and product are separated, catalyst passed through a stripping zone in which the majority of entrained hydrocarbon products are displaced and recovered, whereafter catalyst is passed to a vessel for the regeneration of catalytic activity by means of combustion of remaining hydrocarbon deposits and coke at high temperature, whereafter the regenerated catalyst is recycled to the reaction zone.

In recent years it has become common practice to convert increasingly high boiling range refractory feedstocks, which conversion has been made possible by the development of superior catalysts of stabilised zeolite class having a high tolerance to the increased severity conditions required and to the deactivating effects of feedstock contaminants. Such catalysts also require periodic regeneration whereby the coke formed is combusted. Due to the requirement to operate at specific levels of coke formation for heat balance purposes, the yield of certain product fractions, notably the gasoline range fraction, tend to diminish in line with increasing refractoriness of feedstock.

It is therefore desirable to further increase the selectivity and level of conversion attainable with these catalysts. Attempts have been made to protect the catalysts from deactivating effect of carbon-rich hydrocarbonaceous deposits and of metal deposits. Major improvements have been achieved with the use of riser reaction zones which enable conversion to take place in shorter periods of contact of catalyst and feedstock, and of passivating agents which render metal deposits less harmful to the catalyst. These improvements are limited in that deactivation occurs for the major part on initial contact of catalyst and feedstock thereby deteriorating the level of conversion throughout the further course of the conversion process.

Accordingly it is an object of the present invention to provide a hydrocarbon conversion process having increased resilience to deterioration in level of conversion incurred on initial contact of catalyst and feedstock. We have now found that significant increase in conversion to gasoline range products may be obtained by restraining direct contact of the most refractory feedstock components with the active catalyst component, more particularly by rendering such feedstock components in situ in form(s) retained on the catalyst remote from the active catalyst component, or capable of being converted by the active catalyst component without deleterious effect, or both.

Accordingly the present invention relates to a process for the catalytic conversion of hydrocarbonaceous feedstocks comprising contacting the feedstock with a molecular sieve catalyst of particulate form at elevated temperature in a conversion zone, wherein individual particles of catalyst comprise a core having thereabout a shell and wherein the core comprises acidic microporous molecular sieve crystal(s) and the shell comprises a substantially non-acidic meso- or macroporous oxidic or oxyanionic material.

Preferably the catalyst shell comprises substantially nonacidic mesoporous oxidic or oxyanionic material.

Reference herein to microporous, mesoporous and macroporous material respectively is made with respect to porous materials as hereinbelow defined comprising pore openings characterised by a specific diameter or range of diameter in any given material, as is generally understood in the art. The limitations of the range of pore opening diameters for materials falling in each class is for the present purpose defined most precisely by the function to be performed, whereby some variation exists dependent on the pore configuration and on the inorganic oxide material concerned. In general it should be understood that microporous material comprises pores of diameter of the same order as that of the dimensions of substantially non-refractory hydrocarbonaceous components to be converted whereby it is shape (i.e. dimension) selective having regard to admission of such components within the pores, suitably having pore diameter of less than 1.0 nm, preferably in the range 0.3 nm to 0.9 nm, and may be rendered in acidic form as is required for acidic cracking activity, whilst macroporous material comprises pores of diameter at least an order greater than that of the hydrocarbonaceous components to be converted, suitably of greater than 50 nm, preferably greater than 100 nm, whereby it is substantially non selective having regard to admission of such components within the pores, and is characterised by a substantial lack of acid sites. Since there is some variation in pore diameter in any given macroporous material, it is common to define these by overall (external and pore internal) surface area, the smaller the surface area the greater the average pore diameter. Suitably macroporous material has a surface area of less than or equal to 10 m²/g, preferably less than 5 m²/g, most preferably in the range of 0.01 to 2 m²/g. Materials falling in a class between microporous and-macroporous are known as mesoporous materials which are defined for the present purpose as able to admit hydrocarbon components in non-selective manner via pores of a diameter in the range of 1.0 nm to 100 nm, for example of about 2.0 to 50 nm, also characterized by a substantial absence of acid sites. Reference herein to pores is made with respect to intracrystalline pores existing in a crystal lattice and intraparticulate pores existing between discrete molecules in a particle, to intercrystalline or interparticulate pores existing within an agglomerate of crystals or particles in solution, or to interagglomerate pores, existing between discrete agglomerates of particles or crystals which may be created on drying of the shell coating, or to any other type of pore which may be present in the material itself or once present as a shell coating of the catalyst core. It will be understood that a given material may be naturally occurring or synthesised in different forms thereby exemplifying more than one of the above ranges, for example alumina exists in the macroporous alpha form and in the mesoporous gamma form, or in a single form exemplifying more than one of the above ranges, for example clay comprises pores of both mesoporous and microporous order.

Reference herein to a core and a shell component of the catalyst is to respective zones relatively richer and poorer in the two catalyst component materials above defined. Preferably reference to core and shell component is to discrete components comprising two separate radial zones, whereby it will be understood that the core material as above defined is substantially absent from the catalyst shell and vice versa. It is found that this represents a distinction fundamental to the invention, whereby in the process of the invention feedstock components penetrate sequentially each zone of the catalyst, each zone being characterised by a particular conversion process. More specifically the outer "shell" zone being a locus for non-acidic thermal cracking of certain feedstock components and the inner "core" zone being a locus for standard acidic cracking conversion of select feedstock components including thermally cracked components exiting the shell zone.

The process of the invention is of particular advantage in achieving an increase in the selectivity of conversion of feedstocks to gasoline range products, and moreover leads to an overall increase in yield of gasoline at constant coke make, in comparison to standard FCC processes. By the process of the invention, refractory feedstock components are first contacted at high temperatures with the substantially non-acidic meso- or macroporous shell material whereby they are converted to form less refractory components which proceed via the meso- or macropores to the core acidic microporous molecular sieve material and are selectively converted to product, and/or the refractory feedstock components deposit on impact on the meso- or macroporous shell material in the form of increased refractory level components of such high carbon content that they are resilient to further conversion and whereby they do not come into contact with the acidic microporous molecular sieve material. By choice of meso- or macroporous material which is substantially non-acidic, the initial conversion of most refractory feedstock components is via thermally induced cracking which cracking is thought not to be affected by deposits of high content carbon. It is of particular advantage that such non-acidic meso- or macroporous material does not compete with the acidic microporous molecular sieve core in the selective conversion of less refractory feedstock components, thereby competing to a minor or substantially negligible extent in the conversion of less refractory feedstock components which may be converted to useful products in more selective manner by the shape selective microporous molecular sieve core.

In the process of the invention the catalyst is suitably contacted with the feedstock for less than 10 seconds. Suitably the minimum contact time is 0.1 second. Very good results are obtainable with a process in which the feedstock is contacted with the catalyst during 0.2 to 6 seconds.

The process is carried out at relatively high temperature. A preferred temperature range is 450 to 800 °C, more preferably 475 to 650 °C, for example 500 to 550 °C.

The pressure in the present process can be varied within wide ranges. It is however preferred that the pressure is such that at the prevailing temperature the feedstock is substantially in its gaseous phase or brought thereinto by contact with the catalyst. Hence the pressure is relatively low, suitably in the range from 1 to 10 bar. Subatmospheric pressures are possible but not preferred. It can be economically advantageous to operate at atmospheric pressure. Other gaseous materials may be present during the conversion, such as steam and/or nitrogen.

The weight ratio of the catalyst used relative to the feedstock to be converted (catalyst:feedstock ratio, kg/kg) may vary widely, for example up to 150 kg catalyst per kg of feedstock. Preferably the catalyst:feedstock weight ratio is from 3 to 100:1, for example from 5 to 20:1.

The process according to the present invention can suitably be carried out in a moving bed of catalyst. Suitably this is achieved by passing a fluidizing gas through the catalyst bed. The bed of fluidized catalyst particles which may move up or down in riser or downer flow, and is suitably fluidized to such an extent that a dispersed catalyst phase is produced for operation at short contact times. In this context it should be noted that in FCC processes the catalyst particles only contain a relatively small content of zeolitic components thereby satisfying attrition requirements.

During the process some coke forms on the catalyst, whereby it is advantageous to regenerate the catalyst after contact with the feedstock and separation of products. Regeneration is preferably carried out by subjecting the coked catalyst to a combustion step with an oxidising gas such as air at elevated temperature.

The choice of meso- or macroporous non-acidic oxidic or oxyanionic materials employed in the process of the present invention is dependent to some extent on the feedstock to be converted. With conversion of highly refractory feedstocks a greater diameter of meso- or macropore will be required than in the conversion of less refractory feedstocks. Suitable mesoporous materials include non-acidic oxides or oxyanion compounds of elements selected from Groups 2A, 2B, 3A, 3B, 4A, 4B and the Lanthanides of the Periodic Table of the Elements, for example clays such as kaoline and meta-kaoline, alumina, silica, silica-alumina, magnesium aluminate, magnesia, calcia, titania, zirconia, yttria, ceria, lanthana, tin oxide, aluminium phosphate and mixtures thereof. Examples of suitable substantially non-acidic macroporous materials include alpha-alumina, silica, for example in the form of amorphous silica, silica-aluminas, for example in the form of mullite, magnesia-aluminas, for example in the form of spinels, magnesia-silicas, ceria, yttria, aluminium phosphate and mixtures thereof.

Suitably the meso- or macroporous shell has a thickness sufficient to prevent access of the more refractory feedstock components to the molecular sieve core without hindering access of the less refractory feedstock and in-situ formed components. Suitably access of such refractory feedstock components is prevented by providing a shell comprising sufficient layers in radial direction of crystals or particles of meso- or macroporous material, or agglomerates thereof, i.e. having a sufficient radial thickness, that adjacent interagglomerate, interparticulate or intercrystalline meso- or macropores provide tortuous radiating channels. By this means the chance of refractory feedstock components penetrating the shell and impacting on meso- or macropore walls where they are thermally cracked, is greater than the chance of their proceeding, without contact with meso- or macropore walls to the core of a catalyst particle. Preferably the shell comprises meso- or macroporous material of substantially uniform size agglomerates of substantially uniform size particles or crystals, whereby meso- or macropores created therebetween are of substantial uniformity. It is to be appreciated that cracking catalyst particles are subject to abrasive influences in the course of the cyclic process, whereby some attrition takes place. Accordingly the thickness of the mesoor macroporous shell is suitably selected such that the thickness remaining in equilibrium catalyst particles which are replaced by fresh catalyst to maintain the overall activity and particle size of the FCC unit catalyst inventory, is as above defined. This may be determined having regard to the attrition resistance of the shell material in a given FCC unit. Preferably the thickness of the meso-or macroporous shell remaining in equilibrium catalyst particles is in the range of 1 to 20 micron, preferably in the range of 2 to 10 micron.

The meso- or macroporous shell may be formed with the use of suitable binders as known in the art, for example silica. By this means the strength of the catalyst composition to attrition may be increased.

The microporous molecular sieve core may be comprised of one or more individual crystals but is typically comprised of a cluster of crystals in the form of agglomerates of a size convenient for handling in the cyclic process, suitably in the range of 10 to 100 micron in diameter, preferably in the range of 40 to 90 micron, for example in the range of 50 to 60 micron. Such clusters may be formed as a part of the synthesis of the crystals, by known means, for example by spray-drying in the presence of a suitable binder material, such as an organic component.

The acidic molecular sieve to be employed in the process of the present invention is suitably any known acidic hydrocarbon conversion catalyst. Preferably the molecular sieve comprises a shape selective zeolitic material having pore dimensions suited for the selective conversion of a desired feedstock, more preferably having pore dimensions in the range 0.3-0.9 nm. Examples of suitable zeolites having pore dimensions in the range 0.7 to 0.9 nm include faujasite type zeolites such as zeolites Y and X for example in stabilised form, zeolite beta and zeolite omega. Examples of suitable zeolites having pore dimensions in the range 0.3 to 0.7 nm include crystalline silica (silicalite), silicoaluminophosphates such as SAPO-4 and SAPO-11, aluminium phosphates such as ALPO-11, titanium aluminophosphates and -silicates such as TAPO-11 and TASO-45, boron silicates and crystalline (metallo) silicates such as ferrierite, erionite, theta and the ZSM-type zeolites such as ZSM-5, ZSM-11, ZSM-12, ZSM-35, ZSM-23, and ZSM-38 wherein the metal may comprise aluminium, gallium, iron, scandium, rhodium and/or chromium, and mixtures thereof. Preferably the zeolite is in its acidic hydrogen form.

It is to be appreciated that the greatest benefit in terms of enhanced conversion is to be obtained by use of the catalyst in the process of the invention as the bulk catalyst component, but that additional benefit is to be obtained by use as an additive catalyst component intended for the selective conversion of hydrocarbon components formed in situ by the bulk catalyst component.

The microporous molecular sieve component of the catalyst of the invention is suitably supported on a matrix material known for this purpose, whereby the attrition resistance of the composition is enhanced. Suitable matrix materials are selected from clays, for example in the form of kaoline or meta-kaoline, alumina, silica, silica-alumina, magnesia, titania, zirconia and mixtures thereof. Such matrix materials may be comprised in a mixed phase with the microporous molecular sieve material thereby forming a supported microporous molecular sieve core. Matrix materials are suitably present in a ratio to microporous material of from 10:90 to 90:10, preferably from 50:50 to 85:15.

Suitable feedstocks to be employed in the process of the present invention include any feedstocks which are employed in FCC conversion processes, for example long residues, short residues, flashed distillates, hydrotreated and hydrocracked feedstocks, gas oils, vacuum gas oils, tar sands, shale oils and coal liquids. Commonly employed feedstock blends in FCC conversion processes include residual fractions derived from the crude oils, such as heavy residual oils. These fractions comprise as a significant component asphaltenes, complex carbonaceous products of the aromatic class, insoluble in aromatic-free solvents such as paraffinic solvents. The high carbon content of these residual components renders them prone to coke precursor formation on cracking which has deleterious effects on the cracking of less refractory feedstock components. Hence it is usual to treat such feedstocks for the removal of asphaltenes prior to conversion. Deasphalting of oils is carried out by mixing the oil with an aromatic-free paraffinic solvent, such as pentane or heptane, from which the insoluble asphaltenes precipitate and are separated. In a particular advantage of the process of the invention, feedstocks having a high asphaltene content may be converted directly without prior treatment to remove the refractory asphaltene components, whereby the asphaltenes are thermally cracked by the macroporous refractory shell material as above described. A particular advantage is obtained with the conversion of refractory feedstocks characterised by a high initial boiling point, for example of greater than 370 °C, and a high asphaltene content, for example of greater than 4 %wt.

Residual fractions further comprise heavy metals in significant amount, which metals deposit on the catalyst during the cracking process, thereby deteriorating the catalyst selectivity to gasoline production leading to production of undesired dry gas components. In a further advantage of the process of the invention certain contaminating metals present in residual fractions will also be deposited on the macroporous refractory material and immobilised by coordination with the macroporous material, thereby preventing the deactivation of the microporous molecular sieve core. Such contaminants include nickel, vanadium, iron and sodium.

In a further aspect of the present invention there is provided a catalyst composition in particulate form, wherein individual particles of catalyst comprise a core having thereabout a shell and wherein the core comprises acidic microporous molecular sieve crystal(s) and the shell comprises substantially non-acidic meso- or macroporous oxidic or oxyanionic material.

The catalyst of the invention is suitably obtained by a first stage synthesis of the acidic microporous molecular sieve core-material, optionally supporting this on a matrix. In a second stage the outer shell meso- or macroporous material precursor is introduced about the catalyst core. Preferably each synthesis stage is discrete, the material obtained from each stage being suitably dried before proceeding with the subsequent stage.

Preferably the catalyst core may be prepared by any known means of preparing commercially available FCC catalyst, suitably by slurrying and spray-drying zeolite and matrix precursors separately or together, or by mixing cooled aqueous solutions of each of a salt of silica and of alumina and isolating, drying and calcining the solid zeolite-containing catalyst core obtained. The supported zeolite may then be coated with a shell of meso- or macroporous material by means known in the art for deposit of such materials, which means should not affect the integrity of the microporous molecular sieve core. Suitably the meso- or macroporous shell is formed by performing a second spray-drying of the synthesised and once spray-dried molecular sieve crystals, or particles of molecular sieve crystals composited in a matrix, with a solution comprising suitable precursors of the desired meso- or macroporous material, or by immersion of the molecular sieve crystals or of particles of molecular sieve crystals composited in a matrix material, in such a solution, and drying the resulting composition once a desired thickness of shell has accumulated, or by immersion of the molecular sieve crystals or of particles of molecular sieve crystals composited in a matrix material, in a solution of a precursor of the substantially inert meso- or macroporous oxidic or oxyanionic material at appropriate pH whereby the meso- or macroporous precursor precipitated preferentially on the surface of the (particles of) molecular sieve crystals and conversion to the meso-or macroporous material by a heat treatment once a desired thickness of shell has accumulated. The shell is thus formed of crystals or particles of material, having intercrystalline/-interparticulate meso- or macropores.

The catalyst composition thus obtained may then be calcined and subsequently steam treated as appropriate for the conversion of amorphous material, if present, in the catalyst shell to the desired macroporous form.

Preferably the catalyst shell is obtained by any of the aforementioned techniques, from a "sol" comprising suitable precursors of the meso- or macroporous material. A sol is generally understood in the art to comprise dispersed particles of a substantially regular size in continuous fluid. Preference is also given to processes employing sol-type solutions or certain slurries which provide the same uniformity of particle size and distribution.

More preferably the catalyst shell is obtained by the aforementioned spray-drying technique under carefully selected conditions of temperature, fluidizing air rate, sol or slurry concentration and spray rate, whereby the desired coating is achieved and catalyst particle integrity is maintained.

In a further aspect of the invention of the invention there are provided hydrocarbonaceous products or fractions thereof when obtained by the process of the present invention.

The invention is further illustrated by means of the following non-limiting examples.

### EXAMPLE 1 - Preparation of catalysts according to the invention

This example describes the preparation of Catalysts 1A to 1J by modification of samples of a commercially available fluid catalytic cracking catalyst comprising Y-zeolite and matrix material, hereinafter catalyst 1. Catalyst 1 was determined by means of N adsorption, to have micropore volume of 0.081 ml/g. The samples of catalyst 1 were calcined prior to modification.

### EXAMPLE 1A - Preparation of catalyst 1A

A sample of catalyst 1 was placed in a commercial spray coating unit (NIRO-Aeromatic STREA-1), and fluidized with air having an inlet temperature of 80 °C at a fan speed of 4. A silica sol, AKZO-Nobel Nyacol 2040NH4, containing 40 %w SiO₂ dry solids in an aqueous solution, was supplied to the Spray Coater using a liquid displacement pump, the sol was sprayed over the fluidized catalyst 1 using atomizing air at a pressure of 1.0 Barg. After addition of the sol was completed, the fluidizing of the catalyst was continued for another 30 minutes (for additional drying). The catalyst was unloaded, and calcined in a well ventilated furnace at 550 °C for 2 hours to yield the product catalyst 1A. The silica sprayed onto the base catalyst 1 was 14.8 %w of the mass of the final catalyst 1A as determined from the mass balance, which is in accordance with the reduction of the micropore volume to 0.068 ml/g as determined by N adsorption of catalyst 1A.

### EXAMPLE 1B - Preparation of catalyst 1B

The procedure of Example 1A was followed, with the exception that the amount of silica sol supplied to the spray coating unit was varied, yielding the product catalyst 1B. The silica sprayed onto the base catalyst 1 was 22.6 %w of the mass of the final catalyst 1B, also in accordance with the measured reduction in pore volume.

### EXAMPLE 1C - Preparation of catalyst 1C

The procedure of Example 1A was followed, with the exception that a zirconia sol, Bacote, containing 15.5 %w ZrO₂ dry solids, was supplied to the spray coating unit, to yield the product catalyst 1C. The zirconia sprayed onto the base catalyst 1 was 11.3 %w of the mass of the final catalyst 1C.

### EXAMPLE 1D - Preparation of catalyst 1D

The procedure of Example 1A was followed, with the exception that a cerium acetate sol, PQ Corporation Nyacol, containing 20 %w CeO₂ dry solids, was supplied to the spray coating unit, to yield the product catalyst 1D. The ceria sprayed onto the base catalyst 1 was 15.5 %w of the mass of the final catalyst 1D.

### EXAMPLE 1E - Preparation of catalyst 1E

The procedure of Example 1A was followed, with the exception that an aluminium phosphate sol-type solution, containing 46 g solids per litre solution, obtained by coprecipitation from a solution of aluminium nitrate and phosphoric acid of equimolar ratio Al:P, was supplied to the spray coating unit, to yield the product catalyst 1E. The aluminium phosphate sprayed onto the base catalyst 1 was 10 %w of the mass of the final catalyst 1E.

### EXAMPLE 1F - Preparation of catalyst 1F

The procedure of Example 1A was followed, with the exception that a magnesium aluminate sol-type solution, containing 26 g solids per litre solution, obtained by coprecipitation from an equimolar solution comprising magnesium and aluminate, was supplied to the spray coating unit, to yield the product catalyst 1F. The magnesium aluminate sprayed onto the base catalyst 1 was 8 %w of the mass of the final catalyst 1F.

### EXAMPLE 1G - Preparation of catalyst 1G

The procedure of Example 1A was followed, with the exception that an yttria sol, PQ Corporation Nyacol, containing 14 %w Y₂O₃ dry solids, was supplied to the spray coating unit, to yield the product catalyst 1G. The yttria sprayed onto the base catalyst 1 was 12 %w of the mass of the final catalyst 1G.

### EXAMPLE 1H - Preparation of catalyst 1H

The procedure of Example 1A was followed, with the exception that a stannite sol, PQ Corporation Nyacol SN-15 CG, containing 15 %w SnO₂ dry solids, was supplied to the spray coating unit, to yield the product catalyst 1H. The stannite sprayed onto the base catalyst 1 was 12 %w of the mass of the final catalyst.

### EXAMPLE 1I - Preparation of catalyst 1I

The procedure of Example 1A was followed, with the exception that a mullite sol, Magnesium Electron Chemicals, containing Al₂O₃/SiO₂ in a molar ratio of 3/2, was supplied to the spray coating unit, to yield the product catalyst 1I. The mullite sprayed onto the base catalyst 1 was 8 %w of the mass of the final catalyst 1I.

### EXAMPLE 1J - Preparation of catalyst 1J

The procedure of Example 1A was followed, with the exception that a titania "slurry", Degussa P50, containing 30 %w TiO₂ solids in water, was supplied to the spray coating unit, to yield the product catalyst 1J. The titania sprayed onto the base catalyst 1 was 10 %w of the mass of the final catalyst 1J.

### EXAMPLE 2

This example demonstrates the catalytic cracking performance according to the invention in the process using equilibrium steam contaminated coated catalyst.

Catalyst 1B was contacted with steam at 788 °C for 5 hours in a fluidized bed to mimic equilibrium catalyst activity, and thereafter contacted with a feedstock described in Table 1 below, in a microactivity testing (MAT) unit at a temperature of 540 °C. The process conditions and product yields are given in Table 2 below.

### EXAMPLE 3

This example demonstrates the catalytic cracking performance according to the invention in the process using equilibrium coke, steam and heavy metals contaminated coated catalyst.

Catalyst 1A was contacted in a cyclic deactivation unit (CDU) with a vanadium and nickel-containing gasoil, and with steam at 750 °C, to mimic activity of an equilibrium catalyst loaded with 7200 mg/kg vanadium and 2400 mg/kg nickel. The deactivated catalyst was contacted with the feedstock of Example 2, in a MAT unit following the procedure described in Example 2. The process conditions and product yields are given in Table 2 below.

### EXAMPLE 4 (Comparative)

The procedure of Example 2 was repeated with use of catalyst 1. The process conditions and product yields are given in Table 2 below.

### EXAMPLE 5 (Comparative)

The procedure of Example 3 was repeated with use of catalyst 1. The process conditions and product yields are given in Table 2 below.

**TABLE 1**

| Feedstock Atmospheric Residue | |
|---|---|
| Gravity, API | 21.8 |
| Hydrogen, %w | 12.3 |
| Sulphur, %w | 0.85 |
| Nitrogen, %w | 0.2 |
| Vanadium, ppmv | 8.60 |
| Nickel, ppmv | 4.10 |
| Conradson Carbon, %w | 3.66 |
| Kinematic Viscosity, @ 100 C | 16.2 |
| Aromatic Carbon, %w | 15.5 |

**TABLE 2**

| | Example 2 Catalyst 1B | Example 4 Catalyst 1 | Example 3 Catalyst 1A | Example 5 Catalyst 1 |
|---|---|---|---|---|
| T/°C | 540 | 540 | 540 | 540 |
| Cat/oil ratio¹ | 3 | 3 | 3 | 3 |

| Yields %w | | | | |
|---|---|---|---|---|
| C₁-C₄ | 18.5 | 22.0 | 11.6 | 10.7 |
| C₅-221 °C | 47.9 | 46.6 | 48.7 | 42.2 |
| 221-370 °C | 18.4 | 17.1 | 22.7 | 22.7 |
| 370+ °C | 7.6 | 5.8 | 8.5 | 15.3 |
| Coke¹ | 7.6 | 8.5 | 8.5 | 9.1 |

| | | | | |
|---|---|---|---|---|
| ¹ For a given cat/oil ratio, MAT unit conversion and coke yield are typically higher than those in large scale riser operation. | | | | |

From Table 2 it is apparent that catalysts 1B and 1A exhibit more attractive product yields and lower coke yields than the comparative catalyst 1.

By comparison of the performance of Examples 2 and 3 it is apparent that improvement in performance is observed whether or not the catalyst has been contaminated by heavy metals.

## Claims

1. Process for the catalytic conversion of hydrocarbonaceous feedstocks comprising contacting the feedstock with a molecular sieve catalyst of particulate form at elevated temperature in a conversion zone, characterised in that individual particles of catalyst comprise a core having thereabout a shell wherein the core comprises acidic microporous molecular sieve crystal(s) and the shell comprises a substantially non-acidic meso- or macroporous oxidic or oxyanionic material.

2. Process according to claim 1 carried out in a moving bed of catalyst wherein the catalyst is contacted with the feedstock for less than 10 seconds and suitably more than 0.1 second, preferably during 0.2 to 6 seconds in a weight ratio of up to 150 kg catalyst per kg of feedstock, preferably from 5 to 100:1, for example from 7 to 20:1, at relatively high temperature, preferably in the range of 450 to 800 °C, more preferably 475 to 650 °C, for example 500 to 550 °C, and at a pressure suitably in the range from 1 to 10 bar.

3. Process according to any of claims 1 or 2, wherein the feedstock is selected from long residues, short residues, flashed distillates, hydrotreated and hydrocracked feedstocks, gas oils, vacuum gas oils, tar sands, shale oils and coal liquids, and preferably comprises residual fractions derived from crude oils such as heavy residual oils more preferably having a high initial boiling point, for example of greater than 370 °C, and a high asphaltene content, for example of greater than 4 %wt.

4. Process according to any of claims 1 to 3, wherein the catalyst core comprises microporous material having pore diameter of less than 1.0 nm, preferably in the range 0.3 nm to 0.9 nm and the shell comprises mesoporous material having pore diameter of 1.0 nm to 100 nm, for example of 2.0 to 50 nm, or comprises macroporous material having pore diameter of greater than 50 nm.

5. Process according to any of claims 1 to 4 wherein the core and shell component of the catalyst are present as discrete components comprising two separate radial zones.

6. Process according to any of claims 1 to 5 wherein the substantially non-acidic mesoporous material is selected from non-acidic oxides or oxyanion compounds of elements selected from Groups 2A, 2B, 3A, 3B, 4A, 4B and the Lanthanides of the Periodic Table of the Elements, for example clays, such as kaoline and meta-kaoline, alumina, silica, silica-alumina, magnesium aluminate, magnesia, calcia, titania, zirconia, yttria, ceria, lanthana, tin oxide, aluminium phosphate and mixtures thereof, or wherein the substantially non-acidic macroporous material is selected from alpha-alumina, silica, for example in the form of amorphous silica, silica-aluminas, for example in the form of mullite, magnesia-aluminas, for example in the form of spinels, magnesia-silicas, ceria, yttria, aluminium phosphate and mixtures thereof.

7. Process according to any of claims 1 to 6, wherein the shell comprises meso- or macroporous material of substantially uniform size agglomerates of substantially uniform size particles or crystals.

8. Process according to any of claims 1 to 7, wherein the thickness of the meso- or macroporous shell remaining in equilibrium catalyst particles is in the range of 1 to 20 micron, preferably in the range of 2 to 10 micron.

9. Process according to any of claims 1 to 8, wherein the catalyst shell is obtained by spray-drying, immersion, impregnation or precipitation of a sol comprising suitable precursors of the meso- or macroporous material, onto the preformed core, preferably by spray-drying.

10. Process according to any of claims 1 to 9, wherein the catalyst shell comprises substantially non-acidic mesoporous oxidic or oxyanionic material.

11. Process according to claim 10, wherein the shell comprises mesoporous silica.

12. Process according to any of claims 1 to 11, wherein the molecular sieve comprises a shape selective zeolitic material having pore dimensions in the range 0.3-0.9 nm, for example in the range 0.7 to 0.9 nm including faujasite type zeolites such as zeolites Y and X for example in stabilised form, zeolite beta and zeolite omega, or in the range 0.3 to 0.7 nm including crystalline silica (silicalite), silicoaluminophosphates such as SAPO-4 and SAPO-11, aluminium phosphates such as ALPO-11, titanium aluminophosphates and -silicates such as TAPO-11 and TASO-45, boron silicates and crystalline (metallo) silicates such as ferrierite, erionite, theta and the ZSM-type zeolites such as ZSM-5, ZSM-11, ZSM-12, ZSM-35, ZSM-23, and ZSM-38 wherein the metal may comprise aluminium, gallium, iron, scandium, rhodium and/or chromium, and mixtures thereof.

13. Process according to claim 12 wherein the zeolite is substantially in its acidic hydrogen form.

14. Process according to any of claims 1 to 13 wherein the catalyst is employed as the bulk catalyst component, and/or as an additive catalyst component intended for the selective conversion of hydrocarbon components formed in situ by the bulk catalyst component.

15. Process according to any of claims 1 to 14 which is a fluid catalytic cracking process.

16. Catalyst composition comprising a core of acidic microporous molecular sieve crystal(s) having thereabout a shell of substantially non-acidic meso- or macroporous oxidic or oxyanionic material.

17. Catalyst composition according to claim 16, wherein the shell comprises mesoporous silica.

18. Catalyst according to any one of claims 16 and 17, wherein the molecular sieve crystal(s) are of a shape selective zeolitic material having pore dimensions in the range 0.3-0.9 nm.

19. Process to prepare a catalyst according any one of claims 17-18, wherein a core comprising the acidic microporous molecular sieve crystal(s) is coated with a shell of mesoporous silica material by spray-drying the core with a sol comprising suitable precursors of the mesoporous silica material.

## Patentansprüche

1. Verfahren zur katalytischen Umwandlung von kohlenwasserstoffhältigen Einsatzmaterialien, umfassend das Inkontaktbringen des Einsatzmaterials mir einem Molekularsiebkatalysator in Teilchenform bei erhöhter Temperatur in einer Umwandlungszone, dadurch gekennzeichnet, daß die Einzelteilchen des Katalysators einen Kern mit einer diesen umgebenden Hülle umfassen, worin der Kern saure mikroporöse Molekularsiebkristalle enthält und die Hülle ein im wesentlichen nicht-saures, meso- oder makroporöses oxidisches oder oxyanionisches Material enthält.

2. Verfahren nach Anspruch 1, das in einem bewegten Katalysatorbett ausgeführt wird, worin der Katalysator mit dem Einsatzmaterial für weniger als 10 Sekunden und zweckmäßig mehr als 0,1 Sekunden, vorzugsweise 0,2 bis 6 Sekunden, in einem Gewichtsverhältnis von bis zu 150 kg Katalysator je kg Einsatzmaterial, vorzugsweise von 5 bis 100:1, beispielsweise von 7 bis 20:1, bei verhältnismäßig hoher Temperatur, vorzugsweise im Bereich von 450 bis 800°C, stärker bevorzugt von 475 bis 650°C, beispielsweise 500 bis 550°C, und bei einem Druck von zweckmäßig im Bereich von 1 bis 10 bar in Kontakt gebracht wird.

3. Verfahren nach einem der Ansprüche 1 oder 2, worin das Einsatzmaterial unter langen Rückständen, kurzen Rückständen, Flashdestillaten, hydrobehandelten und hydrogecrackten Einsatzmaterialien, Gasölen, Vakuumgasölen, Teersanden, Schieferölen und Kohleflüssigkeiten ausgewählt ist und vorzugsweise von Rohölen abgeleitete Rückstandsfraktionen umfaßt, wie schwere Rückstandsöle, stärker bevorzugt mit einem hohen Anfangssiedepunkt von beispielsweise größer als 370°C und mit einem hohen Asphaltengehalt, beispielsweise von über 4 Gew.-%.

4. Verfahren nach einem der Ansprüche 1 bis 3, worin der Katalysatorkern ein mikroporöses Material mit einem Porendurchmesser von kleiner als 1,0 nm, vorzugsweise im Bereich 0,3 nm bis 0,9 nm, umfaßt und die Hülle ein mesoporöses Material mit einem Porendurchmesser von 1,0 nm bis 100 nm, beispielsweise 2,0 bis 50 nm, oder ein makroporöses Material mit einem Porendurchmesser von größer als 50 nm umfaßt.

5. Verfahren nach einem der Ansprüche 1 bis 4, worin die Kern- und Hüllenkomponenten des Katalysators als diskrete Komponenten vorliegen, die zwei getrennte Radialzonen umfassen.

6. Verfahren nach einem der Ansprüche 1 bis 5, worin das im wesentlichen nicht-saure, mesoporöse Material unter nicht-sauren Oxiden oder Oxyanionenverbindungen von Elementen aus den Gruppen 2A, 2B, 3A, 3B, 4A, 4B und den Lanthaniden des Periodensystems der Elemente ausgewählt ist, beispielsweise Tone, wie Kaolin und meta-Kaolin, Aluminiumoxid, Siliciumoxid, Siliciumoxid-Aluminiumoxid, Magnesium-aluminat, Magnesiumoxid, Kalziumoxid, Titanoxid, Zirkonoxid, Yttriumoxid, Ceroxid, Lanthanoxid, Zinnoxid, Aluminiumphosphat und deren Gemischen, oder worin das im wesentlichen nicht-saure makroporöse Material unter alpha-Aluminiumoxid, Siliciumoxid, beispielsweise in Form von amorphem Siliciumoxid, Silicaaluminaten, beispielsweise in der Form von Mullit, Magnesiaaluminaten, beispielsweise in der Form von Spinellen, Magnesiasiliciumoxide, Ceroxid, Yttriumoxid, Aluminiumphosphat und deren Gemischen ausgewählt ist.

7. Verfahren nach einem der Ansprüche 1 bis 6, worin die Hülle ein meso- oder makroporöses Material aus im wesentlichen gleich großen Agglomeraten von im wesentlichen gleich großen Teilchen oder Kristallen umfaßt.

8. Verfahren nach einem der Ansprüche 1 bis 7, worin die Dicke der meso- oder makroporösen Hülle, die in Gleichgewichtskatalysatorteilchen verbleibt, im Bereich von 1 bis 20 µm, vorzugsweise im Bereich von 2 bis 10 µm liegt.

9. Verfahren nach einem der Ansprüche 1 bis 8, worin die Katalysatorhülle durch Sprühtrocknen, Eintauchen, Imprägnieren oder Ausfällen eines Sols, das geeignete Vorläufer des meso- oder markroporösen Materials enthält, auf den vorgeformten Kern erhalten wird, vorzugsweise durch Sprühtrocknen.

10. Verfahren nach einem der Ansprüche 1 bis 9, worin die Katalysatorhülle im wesentlichen nicht-saures mesoporöses oxidisches oder oxyanionisches Material umfaßt.

11. Verfahren nach Anspruch 10, worin die Hülle mesoporöses Siliciumoxid umfaßt.

12. Verfahren nach einem der Ansprüche 1 bis 10, worin das Molekularsieb ein formselektives Zeolithmaterial umfaßt, das Porenabmessungen im Bereich von 0,3 bis 0,9 nm aufweist, beispielsweise im Bereich 0,7 bis 0,9 nm, einschließlich Zeolithe vom Faujasittyp, wie Zeolith-Y und Zeolith-X, beispielsweise in stabilisierter Form, beta-Zeolith und omega-Zeolith, oder im Bereich von 0,3 bis 0,7 nm, einschließlich kristallines Siliciumoxid (Silicalit), Silicoaluminophosphate, wie SAPO-4 und SAPO-11, Aluminiumphosphate, wie ALPO-11, Titanaluminiumphosphate und -silicate, wie TAPO-11 und TASO-45, Borsilicate und kristalline (Metallo)silicate, wie Ferrierit, Erionit, Theta-Zeolith und die Zeolithe von ZSM-Typ, wie ZSM-5, ZSM-11, ZSM-12, ZSM-35, ZSM-23 und ZSM-38, worin das Metall Aluminum, Gallium, Eisen, Scandium, Rhodium und/oder Chrom und deren Gemische sein kann.

13. Verfahren nach Anspruch 12, worin der Zeolith im wesentlichen in seiner sauren Wasserstoffform vorliegt.

14. Verfahren nach einem der Ansprüche 1 bis 13, worin der Katalysator als die Massekatalysatorkomponente und/oder als eine Additivkatalysatorkomponente verwendet wird, die für die selektive Umwandlung von Kohlenwasserstoffkomponenten vorgesehen ist, die in situ durch die Massekatalysatorkomponente gebildet werden.

15. Verfahren nach einem der Ansprüche 1 bis 14, wobei es sich um ein fluidkatalytisches Crackverfahren handelt.

16. Katalysatorzusammensetzung, umfassend einen Kern aus sauren mikroporösen Molekularsiebkristallen und eine diesen Kern umgebende Hülle aus im wesentlichen nicht-saurem, meso- oder makroporösem oxidischem oder oxyanionischem Material.

17. Katalysatorzusammensetzung nach Anspruch 16, worin die Hülle mesoporöses Siliciumoxid enthält.

18. Katalysator nach einem der Ansprüche 16 und 17, worin die Molekularsiebkristalle aus einem formselektiven Zeolithmaterial mit Porenabmessungen im Bereich 0,3 bis 0,9 nm bestehen.

19. Verfahren zur Herstellung eines Katalysators nach einem der Ansprüche 17 bis 18, worin ein Kern, der die sauren mikroporösen Molekularsiebkristalle enthält, mit einer Hülle aus mesoporösem Siliciumoxidmaterial durch Sprühtrocknen des Kerns mit einem Sol überzogen wird, das geeignete Vorläufer des mesoporösen Siliciumoxidmaterials enthält.

## Revendications

1. Procédé pour la conversion catalytique de charges d'alimentation hydrocarbonées comprenant la mise en contact de la charge d'alimentation avec un catalyseur de tamis moléculaire de forme particulaire à température élevée dans une zone de conversion, caractérisé en ce que des particules individuelles de catalyseur comprennent un noyau entouré d'une enveloppe dans lequel le noyau comprend un ou des cristaux de tamis moléculaire microporeux acides et l'enveloppe comprend une matière oxydique ou oxyanionique méso- ou macroporeuse essentiellement non acide.

2. Procédé suivant la revendication 1, réalisé dans un lit de catalyseur mobile, dans lequel le catalyseur est mis en contact avec la charge d'alimentation pendant moins de 10 secondes et d'une façon appropriée pendant plus de 0,1 seconde, avantageusement pendant 0,2 à 6 secondes dans un rapport en poids pouvant atteindre 150 kg de catalyseur par kg de la charge d'alimentation, avantageusement de 5 à 100/1, par exemple de 7 à 20/1, à une température relativement élevée, avantageusement dans l'intervalle de 450 à 800°C, plus avantageusement de 475 à 650°C, par exemple de 500 à 550°C, et à une pression d'une façon appropriée dans la gamme de 1 à 10 bars.

3. Procédé suivant l'une ou l'autre des revendications 1 et 2, dans lequel la charge d'alimentation est choisie parmi les résidus longs, les résidus courts, les produits de distillation éclair, les charges d'alimentation hydrotraitées et hydrocraquées, les gasoils, les gasoils sous vide, les sables asphaltiques, les huiles de schiste et les liquides carbonifères, et avantageusement comprend des fractions résiduelles provenant d'huiles brutes telles que les huiles résiduelles lourdes, plus avantageusement ayant un point d'ébullition initial élevé, par exemple supérieur à 370°C, et une teneur en asphtaltènes élevée, par exemple de plus de 4% en poids.

4. Procédé suivant l'une quelconque des revendications 1 à 3, dans lequel le noyau de catalyseur comprend une matière microporeuse ayant un diamètre de pore inférieur à 1,0 nm, avantageusement dans la gamme de 0,3 nm à 0,9 nm et l'enveloppe comprend une matière mésoporeuse ayant un diamètre de pore de 1,0 nm à 100 nm, par exemple de 2,0 à 50 nm, ou comprend une matière macroporeuse ayant un diamètre de pore supérieur à 50 nm.

5. Procédé suivant l'une quelconque des revendications 1 à 4, dans lequel les composants formant noyau et enveloppe du catalyseur sont présents sous la forme de composants distincts comprenant deux zones radiales séparées.

6. Procédé suivant l'une quelconque des revendications 1 à 5, dans lequel la matière mésoporeuse essentiellement non acide est choisie parmi les oxydes ou composés d'oxyanions non acides d'éléments choisis parmi les Groupes 2A, 2B, 3A, 3B, 4A, 4B et les lanthanides du Tableau Périodique des Eléments, par exemple les argiles, telles que le kaolin et le méta-kaolin, l'alumine, la silice, la silice-alumine, l'aluminate de magnésium, la magnésie, l'oxyde de calcium, I'oxyde de titane, la zircone, l'oxyde d'yttrium, l'oxyde de cérium, l'oxyde de lanthane, l'oxyde d'étain, le phosphate d'aluminium et leurs mélanges, ou dans lequel la matière macroporeuse essentiellement non acide est choisie parmi l'alpha-alumine, la silice, par exemple sous la forme de silice amorphe, les silice-alumines, par exemple sous la forme de mullite, les magnésie-alumines, par exemple sous la forme de spinelles, les magnésie-silices, l'oxyde de cérium, l'oxyde d'yttrium, le phosphate d'aluminium et leurs mélanges.

7. Procédé suivant l'une quelconque des revendications 1 à 6, dans lequel l'enveloppe comprend une matière méso- ou macroporeuse d'agglomérats de taille sensiblement uniforme de particules ou cristaux de taille sensiblement uniforme.

8. Procédé suivant l'une quelconque des revendications 1 à 7, dans lequel l'épaisseur de l'enveloppe méso- ou macroporeuse restant dans des particules de catalyseur en équilibre se situe dans la gamme de 1 à 20 microns, avantageusement dans la gamme de 2 à 10 microns.

9. Procédé suivant l'une quelconque des revendications 1 à 8, dans lequel l'enveloppe de catalyseur est obtenue par un séchage par pulvérisation, immersion, imprégnation ou précipitation d'un sol comprenant des précurseurs appropriés de la matière méso- ou macroporeuse, sur le noyau préformé, avantageusement par séchage par pulvérisation.

10. Procédé suivant l'une quelconque des revendications 1 à 9, dans lequel l'enveloppe de catalyseur comprend une matière oxydique ou oxyanionique mésoporeuse essentiellement non acide.

11. Procédé suivant la revendication 10, dans lequel l'enveloppe comprend de la silice mésoporeuse.

12. Procédé suivant l'une quelconque des revendications 1 à 11, dans lequel le tamis moléculaire comprend une matière zéolitique dimensionnellement sélective ayant des dimensions de pores dans la gamme de 0,3-0,9 nm, par exemple dans la gamme de 0,7 à 0,9 nm et notamment des zéolites du type faujasite telles que les zéolites Y et X, par exemple sous une forme stabilisée, de la zéolite bêta et de la zéolite oméga, ou dans la gamme de 0,3 à 0,7 nm et notamment de la silice cristalline (silicalite), des silicoaluminophosphates tels que les SAPO-4 et SAPO-11, des phosphates d'aluminium tels que l'ALPO-11, des aluminophosphates et -silicates de titane tels que les TAPO-11 et TASO-45, des silicates de bore et des (métallo) silicates cristallins tels que ferriérite, érionite, thêta et des zéolites du type ZSM telles que ZSM-5, ZSM-11, ZSM-12, ZSM-35, ZSM-23 et ZSM-38, dans lesquelles le métal peut comprendre de l'aluminium, du gallium, du fer, du scandium, du rhodium et/ou du chrome et leurs mélanges.

13. Procédé suivant la revendication 12, dans lequel la zéolite est essentiellement sous sa forme hydrogène acide.

14. Procédé suivant l'une quelconque des revendications 1 à 13, dans lequel le catalyseur est utilisé comme composant de catalyseur massique et/ou comme composant de catalyseur additif destiné à la conversion sélective de composants hydrocarbonés formés in situ par le composant de catalyseur massique.

15. Procédé suivant l'une quelconque des revendications 1 à 14, qui est un procédé de craquage catalytique fluide.

16. Composition de catalyseur comprenant un noyau de cristal ou cristaux de tamis moléculaire microporeux acides entouré d'une enveloppe de matière oxydique ou oxyanionique méso- ou macroporeuse essentiellement non acide.

17. Composition de catalyseur suivant la revendication 16, dans laquelle l'enveloppe comprend de la silice mésoporeuse.

18. Catalyseur suivant l'une ou l'autre des revendications 16 et 17, dans lequel le ou les cristaux de tamis moléculaire sont d'une matière zéolitique dimensionnellement sélective ayant des dimensions de pores dans la gamme de 0,3-0,9 nm.

19. Procédé de préparation d'un catalyseur suivant l'une ou l'autre des revendications 17 et 18, dans lequel un noyau comprenant le ou les cristaux de tamis moléculaire microporeux acides est entouré d'une enveloppe de matière de silice mésoporeuse au moyen d'un séchage par pulvérisation du noyau avec un sol comprenant des précurseurs appropriés de la matière de silice mésoporeuse.
